# EUROPEAN PATENT APPLICATION

(11) **EP 4 563 433 A1**
(43) Date of publication of application: **04.06.2025**
(21) Application number: 23213140.9
(22) Date of filing: 29.11.2023
(51) Int. Cl.: B60W 50/00, B60W 50/14

(54) **METHODS AND SYSTEMS FOR ADAPTING AN AUTOMATION SYSTEM IN A VEHICLE**

(71) Applicant: Volvo Car Corporation, 405 31 Göteborg (SE)
(72) Inventor: Zhennan, Fei, 417 55 Göteborg (SE); Nouri, Ali, 417 53 Göteborg (SE)
(74) Representative: Nederlandsch Octrooibureau

(57) **Abstract**

A method for adapting a second vehicle automation system based on a first vehicle automation system, wherein the first vehicle automation system has been previously used by a user, the method comprising obtaining first data indicative of one or more automation features of the first vehicle automation system; and providing a control signal to the second vehicle automation system based on the first data.The control signal may either adjust an interior feature in the second automation system and/or adjust a user interface to notify a user.

## Description

### Technical Field

The current disclosure relates to a method for adapting a second vehicle automation system based on a first vehicle automation system when the first vehicle automation system has been previously used by a user, to an automation system in a vehicle, and to enhancing a safe and convenient experience for a user in the second vehicle automation system.

### Background Art

In automotive technology, there are various automation systems such as driver-assistance and autonomous driving systems, collectively referred to as Advanced Driver Assistance Systems (hereinafter "ADAS") and Autonomous Driving (hereinafter "AD"). ADAS comprises a range of automation features aimed at enhancing user experience, safety and comfort. ADAS may include automation features such as adaptive cruise control, lane-keeping assistance, collision avoidance systems, and more, while AD may include automation features that provide the vehicle with the ability to operate without human intervention under certain conditions (e.g., highway autonomous driving). These are only examples of automation features in ADAS and AD, automation features are not limited to these examples. Rather, they encompass any feature within the automation system of a vehicle, extending to user preferences configured within the automation feature parameters.

As the automotive industry progresses, it is expected that the integration of ADAS and AD systems becomes common practice in modern vehicles. However, the realization of these automation systems and their interaction with the user vary among manufacturers and even models of the same manufacturer. Consequently, differences between automation systems may be associated with a safety or risk value reflecting the risk that the user or other traffic participants may be exposed to within that second vehicle. The risk value could, for example, involve the risk of collisions or injuries but may also account for other aspects. Therefore, it is important to manage the associated risks for new users of an automation system, particularly those users transitioning from other automation systems.

### Summary

The methods and systems of the disclosure relate to adapting a second vehicle automation system based on prior use of a user of a first vehicle automation system. To maintain risk and convenience for a user at an acceptable level, differences between the first vehicle and the second vehicle automation system are detected and optionally implemented in the second vehicle automation system, a user interface in the second vehicle automation system may be modified to alert the user to these differences. In this context, the "user interface" refers to an interface such as a human-machine interface through which a user interacts with the second vehicle automation system, including displays, controls, and communication methods. The user interface serves as the primary means for users to provide input to the second vehicle automation system, to receive feedback, and understand internal states in the second vehicle automation system. The user interface may include visual elements, such as touchscreens and displays, physical controls like buttons and knobs, and auditory components like speakers in the vehicle and may extend to other devices such as mobile phones or watches, and/or any other manner in which the user can be presented with the information.

Furthermore, the methods and systems of the disclosure provide the user with a convenient and safe experience with the second vehicle automation system. The method also addresses compatibility between the first vehicle automation system and the second vehicle automation system (e.g., between brands and/or models of vehicles of the same brand) and includes considerations for user preferences and operating conditions of the second vehicle automation system. In this context, a "vehicle brand" refers to the name or label under which a vehicle is marketed and sold to users. An example of a vehicle brand is Volvo Cars, . On the other hand, "vehicle model" refers to a specific version or variant of a particular brand of vehicle. Each model may have similar or distinct features, specifications, and design elements in comparison to other models with the same brand. For example, within the Volvo Cars brand, models may include the XC60, S90, etc.

According to a first aspect, a method for adapting a second vehicle automation system based on a first vehicle automation system, wherein the first vehicle automation system has been previously used by a user, the method comprises obtaining first data indicative of one or more automation features of the first vehicle automation system; and providing a control signal to the second vehicle automation system based on the first data. Such a method allows the second vehicle automation system to be adapted according to one or more automation features of a first vehicle automation system that the user has used before and/or to alert the user of differences between the first and the second vehicle automation system (i.e., automation features that the user is familiar with, has practiced, and may have customized preferences for), which provides a better experience for the user and reduces risks associated with transitioning between automation systems. The first data may encompass information related to one or more aspects, such as the name, configuration, and parameters of the automation features of the first vehicle automation system. In this context, an automation feature may be any feature in the first and/or second vehicle. For example, apart from ADAS and AD features, automation features may include features in the user interface, steering wheel, pedals, seats, tables, arm rests, lighting, display screens and entertainment systems that can influence comfort and safety of the user and/or passengers. Thus the control signal will relate to the automation feature(s) indicated by the first data and may include signals to control a user interface to alert a user of differences between the first and the second automation systems, signals to modify internal states and configuration in the second vehicle that the user may not be aware of immediately, e.g., sensitivity in the Automatic Emergency Braking, and/or signals to make more perceptible changes like adjusting format of notifications by the user interface (i.e. in display screens), moving the steering wheel and/or pedals closer to or farther away from the user, and/or modifying entertainment systems. These are only some examples of automation features, however, many different automation features and/or adjustments could be made depending on the vehicle and/or the vehicle automation system.

The first data may contain either direct information about the automation features in the first vehicle automation system or serve as a reference for obtaining the automation features. In other words, it can either present specific details of the automation features or act as a coded reference, facilitating the obtention of more detailed information when needed. For instance, obtaining the first data might be facilitated by an controller accessing an internal or external database or storage that stores information from both the first and second vehicle automation systems. Alternatively, the user interface may facilitate direct interaction with the user to obtain the automation features. Providing the control signal to the second vehicle automation system, based on the first data, may be performed by the controller, facilitating adjustments within the second vehicle automation system.

According to an embodiment, the method further comprises adjusting the second vehicle automation system based on the control signal. The control signal may prompt diverse adjustments in the second vehicle control system based on the first data. This includes controlling a user interface to alert a user of differences between the first and the second automation systems, initiating implementation of a configuration and/or parameter from an automation feature of the first vehicle automation system into the second vehicle system. This automatic adjustment ensures that the second vehicle automation system better aligns with the user's previous use of the first vehicle automation system. For instance, in a scenario where the cruise control of the first vehicle automation system operates with a user-preferred following distance. When the user transitions to the second vehicle, the control signal can automatically adjust the following distance in the adaptive cruise control of the second vehicle automation system. This transfer of configuration ensures a smoother and more convenient experience as the second vehicle automation system adapts to the user's preferences established in the first vehicle automation system.

According to another embodiment, the method further comprises obtaining second data indicative of at least one difference between the first vehicle automation system and the second vehicle automation system and adjusting a user interface based on the control signal to alert the user to the at least one difference. The user interface is then adjusted based on the control signal to promptly alert the user about the difference between the first vehicle automation system and the second vehicle automation system which assists the user to adapt to the second vehicle automation system. The controller may be configured to run an algorithm that identifies at least one difference in one or more of: automation features, configurations, and parameters between the first vehicle automation system and the second vehicle automation system and generates the second data. Alternatively, the second data may be remotely generated by another control system and/or processor in communication with both the first vehicle automation system and the second vehicle automation system. Adjustment of the user interface may take various forms depending on the user interface and may include providing verbal, audial, or haptic signals to the user.

If the first vehicle automation system and second vehicle automation system each have a similar automation feature with a different associated configuration and/or parameter, the method further comprises determining whether the different associated configuration and/or parameter relates to user preference or to safety. In this context, a "similar automation feature" refers to an automation feature that is present in both the first vehicle automation system and the second vehicle automation system, serving the same purpose. While these automation features may not have the same name, they may be functionally equivalent. For instance, both system might include a feature for keeping a vehicle within a lane, this feature can be called Lane Departure Warning, Lane Assist, Lane Centering or Lane-Keeping Assistance (LKA). Although the name of the automation feature may differ, the associated configuration likely includes a sensitivity, which defines how aggressively the automation system intervenes to keep the vehicle within its lane. In the first vehicle automation system, the LKA feature may be configured to have a first level of sensitivity, while in the second vehicle automation system, it may be configured with a second level of sensitivity, which is higher than the first level of sensitivity (i.e., more aggressive intervention). If the different associated configuration and/or parameter relates to safety, the method further comprises alerting the user of the different associated configuration and/or parameter. Following the previous example as sensitivity level (i.e., associated configuration) of the LKA differs between the first vehicle automation system and the second vehicle automation system, the user is informed of the difference to be better prepared for the second level of sensitivity. This assists the user through the transition from the first vehicle automation system to the second vehicle automation system in a safe and effective manner. In some cases, users may have autonomy to decide to proceed or not with using the automation features due to the informed difference.

In an embodiment, if the different associated configuration and/or parameter relates to safety, the method further comprises presenting to the user a warning before the use of the similar automation feature, wherein the warning is a visual message on the user interface and/or an audio message through a speaker. Using the earlier example, if there is a difference in the activation speed of the LKA feature, the user receives a warning before the anticipated activation, such as before entering a highway. This proactive warning serves to prevent potential safety risks by ensuring the user is informed about the difference before the automation feature is activated/and or used. It aims to avoid unexpected or unsettling alerts during the use of the automation feature, contributing to a smoother and safer user experience. Optionally, the method further comprises deactivating the similar automation feature in the second vehicle automation system; and executing an onboarding protocol to assist the user in utilizing the similar automation feature with the different associated configuration and/or parameter. There may be situations where it is safer and/or more user-friendly to deactivate the automation feature with a different associated configuration or parameter. In such cases, an onboarding protocol is initiated to assist the user in comprehending the automation feature, its limits and its safety implications. For instance, in a scenario where the autonomous driving feature in the first vehicle automation system operates without requiring a lead car, but the similar feature in the second vehicle automation system needs a lead car, deactivating the autonomous driving feature and executing the onboarding protocol may be more effective to guide the user in understanding and utilizing the autonomous driving features safely.

In an embodiment, if the different associated configuration and/or parameter relates to user preference, alerting the driver to the different associated configuration and/or parameter by presenting to the driver a notification related to the different associated configuration and/or parameter during the use of the automation feature, wherein the notification is a visual notification on a user interface and/or an audio notification through a speaker. By notifying the user about the difference related to user preference, the second vehicle automation system allows for a personalized and convenient user experience. For example, for an assistant-parking feature, the user may be notified that proximity sensors are activated in the second vehicle automation system while they were disabled in the first vehicle automation system.

According to an embodiment, if the first vehicle automation system comprises at least one automation feature that is absent in the second vehicle automation system or if the second vehicle automation system comprises at least one automation feature that is absent in the first vehicle automation system, the method further comprises identifying the at least one automation feature in the first vehicle automation system that is absent in the second vehicle automation system and/or the at least one automation feature in the second vehicle automation system that is absent in the first vehicle automation system. Identifying automation features that are present in the second vehicle automation system but absent in the first vehicle automation system (and vice versa) allows to better adjust the second vehicle automation system and/or to inform the user of each of the system's capabilities and limitations. This may improve the user's decision-making during the use of the second vehicle automation system and facilitate a smoother transition from the first vehicle automation system to the second vehicle automation system. Furthermore, this identification may support a more efficient onboarding protocol for the user.

According to a further embodiment, if it is identified that at least one automation feature of the first vehicle automation system is absent in the second vehicle automation system, the method further comprises determining whether the at least one automation feature is compatible with the second vehicle automation system; and if it is determined that the at least one automation feature is compatible with the second vehicle automation system, adding the at least one automation feature to the second vehicle automation system. Determining compatibility and optionally adding absent automation features from the first vehicle automation system into the second vehicle automation system enhances the functionality of the latter, ensuring a smoother transition for the user. This further enables users to continue using automation features they were accustomed to but were initially absent in the second vehicle automation system, thereby providing a more convenient user experience.

In an even further embodiment, if it is identified that at least one automation feature of the second vehicle automation system is absent in the first vehicle automation system, the method further comprises executing an onboarding protocol to assist the user in to assist the user in utilizing the at least one automation feature. This guides the user through the utilization of the new automation feature that was absent in the first vehicle automation system in an easy and user-friendly manner. It will be understood that a similar onboarding protocol may be executed for other user who is not transitioning from the first vehicle automation system but learning to use automation features for a first time.

According to an embodiment, the first data indicative of one or more automation features of the first vehicle automation system comprises one or more of the following: user preferences related to the utilization of the automation features, operating conditions and limitations related to a plurality of operational design domains (ODDs). In vehicles with ADAS and AD, the specified first data enable an advanced adaptation of the second vehicle automation system and an user-friendly experience. By including user preferences, the second vehicle automation system is personalized based on the first vehicle automation system, offering a familiar experience for the user. This further minimizes the learning curve associated with changes in automation features from the first vehicle automation system to the second vehicle automation system. Moreover, the first data including the ODDs ensures that the second vehicle automation system adapts to different driving scenarios, considering safety conditions and limitations of both the first vehicle automation system and the second vehicle automation system. Typically an automation system with AD features is associated with ODD conditions which relate to autonomous driving conditions in which the automation system can safely and capably operate. Each ODD includes what kind of non-driving activities a user can and cannot do, for example, when unsupervised autonomous driving features are activated. Thus, the associated configuration and/or parameters of the ODD in the second vehicle automation system can then be adjusted according to the obtained ODD of the first vehicle automation system.

According to an embodiment, obtaining the first data indicative of one or more automation features of the first vehicle automation system comprises obtaining third data indicative of an identity of the user; and retrieving the first data indicative of the one or more automation features of the first vehicle automation system based on the third data from a database. Advantageously, by obtaining the third data, the first data is automatically retrieved based on the third data, enabling the second vehicle automation system to directly receive the control signal. This saves time for the user, which improves convenience, and accelerates the adaptation of the second vehicle automation system based on the first vehicle automation system. Optionally, obtaining third data indicative of an identity of the user comprises identifying the user by one or more of the following: a user monitor system, a user personal device, receiving input from a user through a user interface; and retrieving the first data indicative of the one or more automation features of the first vehicle automation system based on the identified user. The specified identification methods offer flexibility and convenience in recognizing the user. For instance, a user monitor system, which may incorporate a camera with facial recognition, provides an accurate means of user identification. Additionally, user identity can be identified through wired or wireless connection of personal devices with the second vehicle automation system. These identification methods either alone or in combination may ensure accuracy and contribute to the adaptability and user-friendliness of the second vehicle automation system.

According to another aspect, an automation system for a vehicle comprises an controller configured to perform any of the methods previously described, and a human-machine interface, in communication with the controller to interact with a user of the vehicle. The controller is designed to obtain the first data indicative of one or more automation features of the first vehicle automation system and provide control signals within the second vehicle automation system based on this first data. The controller may identify differences between a another automation system and the automation system and generate a corresponding control signal to adjust the automation system. This adjustment may involve adjustment of automation features in the automation system and/or adjustment of the human-machine interface to communicate differences to the user. The user human-machine interface may guide a user through transition from another automation system to the automation system and may include (or be connected to) a screen, a touch screen, an application on a separate device (e.g., mobile telephone or watch), buttons, a verbal or haptic interaction area, or any other appropriate system to enable interaction with a user. By providing a user information, guidance and/or assistance in the use of automation features and/or differences, the user is better able to understand and operate the automation system. For example, the user may be accustomed to using the Lane Keeping Assist (LKA) feature in the another automation system which had a more assertive LKA that actively kept the vehicle centered, and the LKA of the automation system may provide subtle nudges to prevent unintentional lane departure. The control signal may ensure an effective transition for the user by notifying them through the user interface about the difference in LKA behavior, allowing them to adapt to the automation system with ease and avoid any unexpected steering interventions.

According to a further aspect, a vehicle comprises the automation system previously described and/or is configured to perform any of the methods previously described. Such a vehicle provides a comfortable and convenient interior for users when a user has been previously used another vehicle with another automation system.

### Brief Description of Drawings

Figure 1 illustrates a method according to the disclosure for adapting a second vehicle automation system based on a first vehicle automation system;
Figure 2 schematically illustrates an example of a second vehicle with a second automation system according to the disclosure and a first vehicle with a first vehicle automation system.

### Description of Embodiments

The following is a description of certain embodiments of the present disclosure, given by way of example only and with reference to the figures.

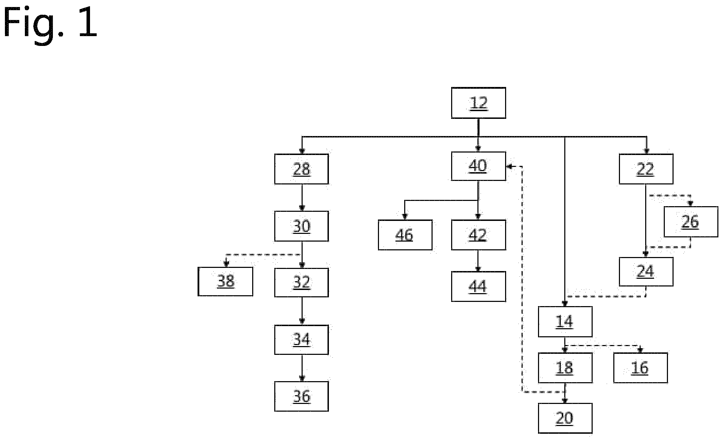

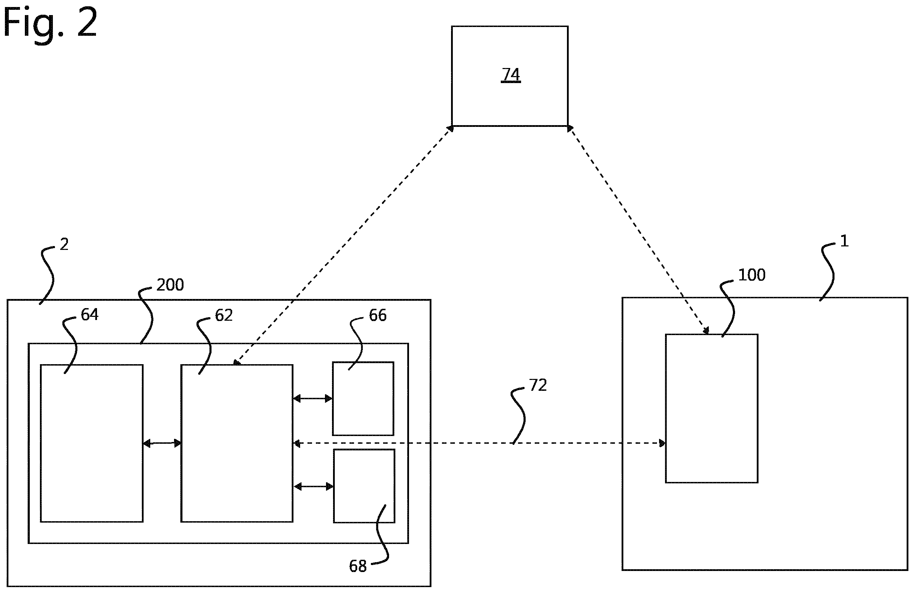

Figure 1 illustrates a method 10 according to an embodiment of the present disclosure for adapting a second automation system 200 of a second vehicle 2 based on a first automation system 100 of a first vehicle 1, when the first automation system 100 of the first vehicle 1 has been previously used by a user; and Figure 2 schematically illustrates an example of the second vehicle 2 with the second automation system 200, according to the present disclosure, able to perform such a method 10, and a first vehicle 1 with a first automation system 100. The automation systems 100, 200 of the first vehicle 1 and the second vehicle 2 may share information through a wired or wireless connection 72 and/or through a database 74 external to the first and second vehicle 1, 2.

The second vehicle 2 schematically shown in Figure 2 comprises the second automation system 200, which includes the necessary software and hardware components for performing method 10 set out in Figure 1, and includes a controller 62 which may comprise a control system (e.g., central processing unit, electronic control unit), storage 64, and a user interface 66, such as a human-machine interface.

Controller 62 receives inputs from internal systems in the second vehicle 2 and/or external inputs from the first vehicle 1 and/or the external database 74, and uses that, in combination with the data and software in storage 64, to execute method 10. Information related to the second automation system 200, including the automation features may be contained in storage 64 and/or in the external database 74. Controller 62 can receive signals and/or information, and can also send signals for the control of internal systems in the second automation system 200, (i.e., storage 64, user interface 66, and other sub control units and/or subsystems 68), or to communicate with the first automation system 100 of the first vehicle 1 and/or the external database 74. This can be wirelessly or through wired connections.

The controller 62, is configured to interact with the user through the user interface 66 for receiving information, such as input to identify the user, or modify user preferences and for providing assistance for using the second automation system 200. The user interface 66 can be, for example, a user interface in the form of a touchscreen or any other interface which can provide and/or receive information. The user interface 66 serves as a conduit for users to input preferences and adjustments related to the second automation system 200. Users can communicate their preferences regarding automation features, configurations, or other parameters which may or may not be related to the first automation system 100. This dynamic interaction between the controller 62 and the user through the user interface 66 allows the user to actively participate in configuring the second automation system 200 according to their preferences.

The controller 62 may also notify, and or alert the user by using the user interface 66 through diverse means. For example, visual notifications and/or alerts, presented on the display screen, offer users clear and immediate insights into relevant information. These visual notifications and/or alerts may include warnings, messages, or graphical indicators. Additionally, the user interface 66 may be equipped to deliver audio notifications through speakers, such as spoken messages or distinctive sounds. Furthermore, the user interface 66 can employ haptic feedback mechanisms to alert the user. Tactile sensations, such as vibrations or touch-based feedback, offer a tangible way to communicate notifications and alerts. The controller 62 and/or the user interface 66 can be related to specific versions of the second automation system 200, which can be updated as needed or desired throughout the vehicle and system lifetime.

The controller 62 is configured to control the activation/deactivation and configuration of automation features in the second automation system 200. It exercises control over both software and hardware components associated with these automation features. Thus, the controller 62 may have access or be comprised by other of the sub control units and/or subsystems 68 in the second vehicle 2 discussed or shown herein, which can include one or more actuators to move and/or reconfigure settings, one or more sensors to measure interior configurations and positions for monitoring and control during interior adaptations and/or adjustments and/or to monitor vehicle exterior and/or interior conditions, etc., related to the automation features. For example, for the automation feature of Adaptive Cruise Control (ACC), the controller 62 is able to adjust the ACC's parameters, both in software and hardware, which might involve modifying acceleration profiles and/or tuning the behavior of sensors and actuators associated with ACC.

Typically, storage 64 includes an internal database which stores information about all automation features of AD and/or ADAS system in the second automation system 200 and their associated configuration and/or parameters as well as storage 64 for the compiled software program implementing the methods. Thus, when the control signal is provided to the second automation system 200 based on the first data, the controller 62 may take action by looking at the information in storage 64 in combination with any other inputs.

The controller 62 may use the user interface 66 to obtain information indicative of the identity of the user, their preferences and/or experiences of the user with the first automation system 100 or other automation system and/or vehicle. It may also identify a user which identity is yet unknown to the second automation system 200. Obtaining information related to user identity may also involve the user providing input through the user interface 66 or through various automatic means including but not limited to a user monitor system and personal devices (such as a mobile phone, watch, etc.). For example, the user can indicate in a touch screen their name to identify identity, or the second automation system may identify the user's mobile phone.

Method 10 (see Fig. 1) shows an example method which can be performed by the second automation system 200. Method 10 starts with obtaining first data indicative of one or more automation features of the first automation system 100 of the first vehicle 1 (step 12). This can involve controller 62 receiving input either from an internal system (e.g., user interface 66, storage 64) or from an external system (e.g., external database 74, the first vehicle 1). For instance, the user may input the first data through the user interface 66, specifying the automation features utilized in the first automation system 100 and their preferred configurations or parameters. Alternatively, the first data may have been previously stored in the storage 64 before the user enters the vehicle or commences to use the second automation system 200.

Optionally, obtaining the first data comprises obtaining third data indicative of an identity of the user (step 22) and retrieving the first data based on the third data from the external database 74 (step 24) and/or the first automation system 100 in the first vehicle 1. This may be done in different ways, for example the third data may be obtained by identifying the user by one or more of the following: a user monitor system, a user personal device, and receiving input from a user through the user interface 66 (step 26). In this context, the second automation system 200 may directly receive input from the user via the user interface 66, allowing the user, for instance, to select a profile. Alternatively, the system may utilize sensors to identify the user's face or establish a connection with the user's personal device through means like a mobile application, Bluetooth, or a mobile network.

Based on the first data, a control signal is provided to the second vehicle automation system (step 14). The controller 62 may generate and output the control signal to one or more of the internal systems i.e., storage 64, user interface 66, subsystems 68, associated to the controller 62. The control signal may be any kind of signal appropriate to communicate with above mentioned systems. Consecutively, the second automation system 200 may be adjusted based on the control signal (step 16). This may involve an adjustment in the controller 62 itself and/or adjustment of one or more of the internal systems in the second automation system 200. That would depend on the information of the first data. For instance, if the first data indicates the associated configuration of an automation feature in the first automation system 100, the adjustment may involve modifying the associated configuration of a similar automation feature in the second automation system 200. As an example, the control signal may specify an adjustment in the distance at which the Automatic Emergency Braking system (AEB) becomes active, defining the proximity required before the system engages in braking. Alternatively, the first data may indicate the automation features present in the first automation system 100.

The method 10 may further comprise obtaining a second data indicative of at least one difference between the first automation system 100 and the second automation system 200 (step 18). The at least one difference may be derived by using the first data or obtained using similar ways described earlier to obtain the first data. The difference could pertain to various attributes or preferences related to an automation feature, such as name, presence, associated configuration, parameter, limitation, or any other. For instance, the difference may indicate a sensitivity difference of a Blind Spot Information System (BLIS), which is an automation feature designed to identify other vehicles entering the blind spot. In this case the control signal may also indicate the difference. Consecutively, the user interface 66 may be adjusted based on the control signal to alert the user to the at least one difference (step 20), for example by the controller 62. The alert to the user may have any appropriate form as described earlier to effectively communicate the at least one difference.

Based on the first data and optionally the second data, the method 10 may determine if the first automation system 100 and second automation system 200 each have a similar automation feature with a different associated configuration and/or parameter (step 28). A "similar automation feature" refers to an automation feature that is present in both the first automation system 100 and the second automation system 200, serving the same or a similar purpose. While these automation features may not share identical names, they are functionally equivalent. For instance, Lane Keeping Assist (LKA) is an automation feature that can be known by various names in different vehicle brands. Some alternative names include Lane Departure Warning (LDW), Lane Keep Assist System (LKAS) and Lane Departure Prevention (LDP). Despite potential variations in how each brand configures or names this feature, the fundamental purpose remains consistent - providing a warning to enhance driver awareness and prevent unintentional lane departures.

Subsequently, it may be determined whether the different associated configuration and/or parameter relates to user preference or to safety (step 30). For example, configuration and/or parameters associated to LKA may include warning type (e.g., visual and/or audible), on/off switch, speed-dependent activation. Warning type is likely related to user preference, as the user may choose the kind of alert that they want to receive. Conversely, the on/off switch relates to safety, as users should not caught off guard by unexpected interventions from the second automation system 200. In some instances, a configuration and/or parameter may relate to both user preference and safety. For example, users may have the option to choose the speed-dependent activation for the LKA within a specified range. This configuration, while offering a degree of user customization, also holds implications for safety. Users may rely on an intervention at a speed outside the capabilities of the second automation system 200.

If the different associated configuration and/or parameter relates to user preference, presenting to the user a notification related to the different associated configuration and/or parameter during the use of the automation feature, the notification may be a visual notification on the user interface 66 and/or an audio notification through a speaker (step 38). For example, the user may be presented with a notification that the visual warning of the LKA was a "beep" in the first automation system 100 and that the second automation system 200 uses a "chime" instead.

Conversely, if it is determined that the different associated configuration and/or parameter relates to safety, the user is alerted of the different associated configuration and/or parameter (step 32). In the earlier example, the user would be alerted whether the LKA is activated or deactivated, allowing them to anticipate and make an informed decision regarding the use of this automation feature. Optionally, a warning is presented to the user before the use of the similar automation feature, the warning may be a visual message on the user interface 66 and/or an audio message through a speaker (step 34). It is important to emphasize that alerts or warnings related to safety, should be more noticeable and potentially less ignorable by the user than the notifications described earlier. This higher perceptibility can ensure that users are fully aware of changes that may have safety implications.

The controller 62 may provide a control signal to the user interface 66 for presenting the warning. Such a warning informing the user can be especially useful to prevent an urgent or emergency situation when the difference in the similar feature is related to safety. Alternatively, the similar automation feature is deactivated in the second automation system 200; and an onboarding protocol is executed to assist the user in utilizing the similar automation feature with the different associated configuration and/or parameter (step 36). Deactivating the feature ensures that the second automation system 200 does not behave in a manner that might differ from the user's expectations, reducing the likelihood of unexpected actions that could compromise safety. Furthermore, the onboarding protocol improves the user's understanding of the new configuration and/or parameter. This is particularly useful for autonomous driving features, in which the user might need more time to accustomed to different or new ODDs of the second automation system 200 in comparison to the first automation system 100. For example, the onboarding protocol may be designed to inform the user about an ODD that specifies the acceptable traffic conditions and scenarios in which the second automation system 200 and the second vehicle 2 can safely operate. This may include considerations for traffic density, speed differentials, and the behavior of other road users, such as vehicles, pedestrians, and cyclists.

Based on the first data and/or the second data the method 10 may further identify if the first automation system 100 comprises at least one automation feature that is absent in the second automation system 200 or if the second automation system 200 comprises at least one automation feature that is absent in the first automation system 100 (step 40). For example, the automation feature Cross Traffic Alert may be absent in the second automation system 200. Optionally, the method 10 may determine whether the at least one automation feature is compatible with the second automation system 200 (step 42), e.g., whether the Cross Traffic Alert is compatible with the second automation system 200. Compatibility may involve having the necessary software and/or hardware resources for the automation feature. If the at least one automation feature is compatible with the second automation system 200, the feature may be added to the second automation system 200 (step 44), for example, through an over-the-air update (OTA) to download the absent automation feature via a cellular network or Wi-Fi connection.

If it is identified (in step 40) that at least one automation feature of the second vehicle automation system is absent in the first vehicle automation system, the method 10 comprises executing an onboarding protocol to assist the user in utilizing the at least one automation feature (step 46). For example, if the first automation system 100 operates at a maximum level 3 of driving automation, while the second automation system 200 operates up to a maximum of level 4, the user may require more in depth guidance to adapt to the higher capabilities provided by the second automation system 200.

Thus, the second automation system 200 is able to adapt the in an effective and convenient manner for the user based on the first automation system 100 when the first automation system 100 has been previously used by the user. Past automation systems lacked the ability to adapt based on experiences from other vehicles. Instead, they often relied on the user's manual input of preferences when presented with an opportunity to use an automation feature. Such systems failed to account for the user's experiences with automation systems previously used by the user, leading to potential inconvenience, especially when encountering differences in automation features, associated configurations, and parameters between the first and second automation systems. This could lead to a time-consuming and cumbersome trial-and-error process for each automation feature.

In summary, the current methods and systems provide ways of conveniently and (sometimes) automatically adapting the second automation system 200 based on the first automation system 100. The second automation system 200 system is also able to inform, guide and assist the user during adaptations for a more comfortable, informed and confident user experience. This can help the user to prepare for differences between automation systems and maintain confidence in the safety of the vehicle. This also contributes to maintain risk the risk of transition from the first automation system 100 to the second automation system at an acceptable level.

The automatic identification of differences and the adaptation of the second automation system ensure that users experience a comfortable and convenient transition. This adaptive approach promotes a smooth and fast transition from the first automation system 100 to the second and prioritizes safety throughout the process. The systems and methods can also provide good communication with, information to, and guidance of, the user prior to and during the use of automation features of the second automation system, ensuring that the user feels comfortable and well-informed during the transition process. Additionally, the methods and systems can be easily adapted over a wide range of models, brands or original manufacturers of vehicles.

Those skilled in the art will appreciate that the methods, systems and components described herein may comprise, in whole or in part, a combination of analog and digital circuits and/or one or more appropriately programmed processors (e.g., one or more microprocessors including central processing units (CPU)) and associated memory, which may include stored operating system software, firmware and/or application software executable by the processor(s) for controlling operation thereof and/or for performing the particular algorithms represented by the various functions and/or operations described herein, including interaction between and/or cooperation with each other as well as transmitters and receivers. One or more of such processors, as well as other digital hardware, may be included in a single ASIC (Application-Specific Integrated Circuitry), or several processors and various digital hardware may be distributed among several separate components, whether individually packaged or assembled into a SoC (System-on-a-Chip).

Furthermore, the systems, methods and components described, and/or any other arrangement, unit, system, device or module described herein may for instance be implemented in one or several arbitrary nodes comprised in the vehicle and/or one or more separate devices or systems. In that regard, such a node may comprise an electronic control unit (ECU) or any suitable electronic device, which may be a main or central node. It should also be noted that the these may further comprise or be arranged or configured to cooperate with any type of storage device or storage arrangement known in the art, which may for example be used for storing input or output data associated with the functions and/or operations described herein. The systems, components and methods described herein may further comprise any computer hardware and software and/or electrical hardware known in the art configured to enable communication therebetween.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure is not limited to the particular embodiments disclosed, but that the disclosure will include all embodiments falling within the scope of the appended claims .

## Claims

1. A method for adapting a second vehicle automation system based on a first vehicle automation system, wherein the first vehicle automation system has been previously used by a user, the method comprising:
obtaining first data indicative of one or more automation features of the first vehicle automation system; and
providing a control signal to the second vehicle automation system based on the first data.

2. The method of claim 1, comprising adjusting the second vehicle automation system based on the control signal.

3. The method of claim 1 or claim 2, comprising:
obtaining second data indicative of at least one difference between the first vehicle automation system and the second vehicle automation system, and
adjusting a user interface based on the control signal to alert the user to the at least one difference.

4. The method of any of the preceding claims, wherein obtaining the first data indicative of one or more automation features of the first vehicle automation system comprises:
obtaining third data indicative of an identity of the user; and
retrieving the first data indicative of the one or more automation features of the first vehicle automation system based on the third data from a database.

5. The method of claim 4, wherein obtaining third data indicative of an identity of the user comprises:
identifying the user by one or more of the following: a user monitor system, a user personal device, and receiving input from a user through a user interface; and
retrieving the first data indicative of the one or more automation features of the first vehicle automation system based on the identified user.

6. The method of any of the preceding claims, wherein if the first vehicle automation system and second vehicle automation system each have a similar automation feature with a different associated configuration and/or parameter, the method further comprises:
determining whether the different associated configuration and/or parameter relates to user preference or to safety; and
if the different associated configuration and/or parameter relates to safety, alerting the user of the different associated configuration and/or parameter.

7. The method of claim 6, wherein if the different associated configuration and/or parameter relates to safety, the method further comprises:
presenting to the user a warning before the use of the similar automation feature, wherein the warning is a visual message on the user interface and/or an audio message through a speaker.

8. The method of claim 7, and further comprising:
deactivating the similar automation feature in the second vehicle automation system; and
executing an onboarding protocol to assist the user in utilizing the similar automation feature with the different associated configuration and/or parameter.

9. The method of claim 6, wherein if the different associated configuration and/or parameter relates to user preference, alerting the driver to the different associated configuration and/or parameter by:
presenting to the user a notification related to the different associated configuration and/or parameter during the use of the automation feature, wherein the notification is a visual notification on a user interface and/or an audio notification through a speaker.

10. The method of any of the preceding claims, wherein if the first vehicle automation system comprises at least one automation feature that is absent in the second vehicle automation system or if the second vehicle automation system comprises at least one automation feature that is absent in the first vehicle automation system, the method further comprises:
identifying the at least one automation feature in the first vehicle automation system that is absent in the second vehicle automation system and/or the at least one automation feature in the second vehicle automation system that is absent in the first vehicle automation system.

11. The method of claim 10, wherein if it is identified that at least one automation feature of the first vehicle automation system is absent in the second vehicle automation system, the method further comprises:
determining whether the at least one automation feature is compatible with the second vehicle automation system; and
if it is determined that the at least one automation feature is compatible with the second vehicle automation system, adding the at least one automation feature to the second vehicle automation system.

12. The method of claim 10, wherein if it is identified that at least one automation feature of the second vehicle automation system is absent in the first vehicle automation system, the method further comprises:
executing an onboarding protocol to assist the user in utilizing the at least one automation feature.

13. The method of any of the preceding claims, wherein the first data indicative of one or more automation features of the first vehicle automation system comprises:
user preferences related to the utilization of the automation features, and/or
operating conditions and/or limitations related to a plurality of operational design domains (ODDs).

14. An automation system for a vehicle comprising:
a controller configured to perform the method of any of the preceding claims, and
a human-machine interface, in communication with the controller to interact with a user of the vehicle.

15. A vehicle comprising the automation system of claim 14.
